(19) Europäisches Patentamt / European Patent Office / Office européen des brevets

(11) **EP 4 129 626 B1**

(12) **EUROPEAN PATENT SPECIFICATION**

(45) Date of publication and mention
of the grant of the patent:
**11.06.2025  Bulletin 2025/24**

(21) Application number: **21775107.2**

(22) Date of filing: **22.03.2021**

(51) International Patent Classification (IPC):
***B29C 55/12*** *(2006.01)*     ***B65D 65/40*** *(2006.01)*
***C08J 5/18*** *(2006.01)*

(52) Cooperative Patent Classification (CPC):
**B29D 7/01; C08J 5/18;** B29C 55/12; B29K 2023/12;
C08J 2323/12; C08J 2423/12

(86) International application number:
**PCT/JP2021/011661**

(87) International publication number:
**WO 2021/193509 (30.09.2021 Gazette 2021/39)**

(54) **BIAXIALLY-ORIENTED POLYPROPYLENE FILM**

BIAXIAL ORIENTIERTE POLYPROPYLENFOLIE

FILM DE POLYPROPYLÈNE À ORIENTATION BIAXIALE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.03.2020  JP 2020052478**

(43) Date of publication of application:
**08.02.2023  Bulletin 2023/06**

(73) Proprietor: **TOYOBO CO., LTD.**
**Osaka-shi, Osaka 530-0001 (JP)**

(72) Inventors:
 • **TANEKI, Kensuke**
 **Inuyama-shi, Aichi 484-8508 (JP)**
 • **IMAI, Toru**
 **Inuyama-shi, Aichi 484-8508 (JP)**
 • **YAMADA, Kouji**
 **Otsu-shi, Shiga 520-0292 (JP)**
 • **HORINOUCHI, Kazuhito**
 **Otsu-shi, Shiga 520-0292 (JP)**
 • **NAKANO, Mahiro**
 **Inuyama-shi, Aichi 484-8508 (JP)**

(74) Representative: **Vossius & Partner**
**Patentanwälte Rechtsanwälte mbB**
**Siebertstraße 3**
**81675 München (DE)**

(56) References cited:
**WO-A1-2013/111779     WO-A1-2017/221781
JP-A- 2013 040 226     JP-A- 2017 226 161
US-B2- 6 638 637**

# EP 4 129 626 B1

## Description

### TECHNICAL FIELD

The present invention relates to a biaxially-oriented polypropylene film having excellent stiffness and excellent heat resistance. More specifically, the present invention relates to a biaxially-oriented polypropylene film which can be suitably used for a packaging bag, since the packaging bag made from the film can easily maintain its bag shape and the film is heat sealed with less wrinkles at heat sealed part.

### BACKGROUND ART

A biaxially-oriented polypropylene film is used for packaging and industrial applications due to its moistureproofness, enough stiffness and heat resistance. In recent years, as the applications expand, the demand for the film with higher performance is increasing. In particular, the improvement of film stiffness is expected. From the consideration of an environment, the film is required to maintain its strength even when the film has reduced volume (reduced film thickness), and it is essential to significantly improve film stiffness to achieve such a film. As a method to improve film stiffness, it is known that crystallinity or melting temperature of polypropylene resin can be developed by improving a process technology or a catalyst involved in polymerization of polypropylene resin. In spite of those improvements, a biaxially-oriented polypropylene film having sufficient stiffness is not achieved.

It is suggested that in a process for producing a biaxially-oriented polypropylene film, after stretching in the width direction, the film is subjected to a first heat treatment while being relaxed at a temperature not higher than the stretching temperature in the width direction, and thereafter, the film is subjected to a second heat treatment at a temperature ranging from the temperature of the first heat treatment to the stretching temperature in the width direction (Patent Literature 1). It is also suggested that after stretching in the width direction, the film is further subjected to stretching in the longitudinal direction (Patent Literature 2). Though the film disclosed in Patent Literature 2 is superior in stiffness, wrinkles are likely to occur at a heat sealed part after heat sealing, and the film is inferior in heat resistance. The film disclosed in Patent Literature 1 has low orientation, and the stiffness of the film is not sufficient. Patent Literature 3 discloses a laminated film having a coating layer composed of a resin composition comprising at least a polyvinylidene chloride-based resin on at least one surface of a base material film, wherein the resin composition has a density of 1.20 to 1.60 $g/cm^3$ and the thermal shrinkage in the MD direction and the thermal shrinkage in the TD direction of the laminated film at 120°C are 2.0% or less, and wherein the base film may be an oriented film mainly composed of a propylene-based polymer having a defined mesopentad fraction, comonomer content, melt flow rate and X-ray diffraction characteristics.

### CITATION LIST

### PATENT LITERATURE

Patent Literature 1: WO2016/182003 A

Patent Literature 2: JP2013-177645 A

Patent Literature 3: JP2017-226161 A

### SUMMARY OF THE INVENTION

### PROBLEMS TO BE SOLVED BY THE INVENTION

The present invention aims to solve above problems. That is, the present invention aims to provide a biaxially-oriented polypropylene film having excellent stiffness, excellent heat resistance to high temperature as high as 150°C, and less breakage at the time of bag making. More specifically, the present invention aims to provide a biaxially-oriented polypropylene film which can easily maintain its bag shape when made into a packaging bag and also can be heat sealed with less wrinkles at and around heat sealed part.

### SOLUTION TO THE PROBLEMS

As a result of thorough research to solve the problems, the present inventors reached to a biaxially-oriented polypropylene film satisfying the following requirements (1) and (2), and characterized in that the film further satisfies the following requirement (3):

(1) a half width of a peak derived from an oriented crystal in a width direction of the film in an azimuth dependence of a (110) plane of polypropylene α-type crystal through measurement with wide-angle X rays diffraction is 25° or less;

(2) the film has a heat-shrinkage ratio at 150°C of 10% or less in a longitudinal direction and 24% or less in a width direction;

(3) the film has a tensile elongation at break at 23°C of 195% or more in the longitudinal direction.

In this case, the biaxially-oriented polypropylene film preferably has a heat-shrinkage ratio at 120°C of 2.0% or less in the longitudinal direction and 5.0% or less in the width direction, and the heat-shrinkage ratio at 120°C in the longitudinal direction is preferably smaller than the heat-shrinkage ratio at 120°C in the width direction.

Also, in this case, the biaxially-oriented polypropylene film preferably has a refractive index in the longitudinal direction Ny of 1.5230 or more and ΔNy of 0.0220 or more.

Further, in this case, the biaxially-oriented polypropylene film preferably has a haze of 5.0% or less.

Furthermore, in this case, the biaxially-oriented polypropylene film preferably comprises a polypropylene resin having a mesopentad fraction of 97.0% or more.

Furthermore, in this case, the biaxially-oriented polypropylene film preferably comprises a polypropylene resin with a crystallization temperature of 105°C or higher and a melting temperature of 160°C or higher.

Furthermore, in this case, the biaxially-oriented polypropylene film preferably comprises a polypropylene resin with a melt flow rate of 4.0 g/10mins or more.

Furthermore, in this case, an amount of a polypropylene resin component having a molecular weight of 100,000 or less is preferably 35 mass% or more in the polypropylene resin forming the biaxially-oriented polypropylene film.

Furthermore, in this case, the biaxially-oriented polypropylene film preferably has an orientation degree of 0.85 or more.

ADVANTAGEOUS EFFECTS OF THE INVENTION

The biaxially-oriented polypropylene film of the present invention has high stiffness and excellent heat resistance to high temperature as high as 150°C. That enables the bag shape of a packaging bag to be easily maintained when the film is made into the packaging bag. Also, wrinkles are less likely to occur at heat sealed part when the film is heat sealed, resulting in producing the biaxially-oriented polypropylene film preferably used for a packaging bag. Moreover, the biaxially-oriented polypropylene film is excellent in its stiffness, so the film can maintain its strength even though the film thickness is reduced, and the film can be preferably used for applications requiring higher stiffness.

DESCRIPTION OF EMBODIMENTS

Hereinafter, the biaxially-oriented polypropylene film of the present invention will be described in more detail.

The biaxially-oriented polypropylene film of the present invention consists of a polypropylene resin composition comprising a polypropylene resin as a main component. The term "main component" means that the proportion of the polypropylene resin in the polypropylene resin composition is 90 mass% or more, more preferably 93 mass% or more, further preferably 95 mass% or more, and particularly preferably 97 mass% or more.

(Polypropylene resin)

The polypropylene resin for the present invention may be a polypropylene homopolymer or a copolymer with ethylene and/or α-olefin having 4 or more carbon atoms. A propylene homopolymer substantially free from ethylene and/or α-olefin having 4 or more carbon atoms is preferable. Even if the polypropylene resin comprises the components of ethylene and/or α-olefin having 4 or more carbon atoms, the amount of the components of ethylene and/or α-olefin having 4 or more carbon atoms is preferably 1 mol% or less. The upper limit of the amount of the components is more preferably 0.5 mol%, further preferably 0.3 mol%, and further preferably 0.1 mol%. When the amount is within the above range, crystallinity can be easily improved. Examples of the α-olefin component having 4 or more carbon atoms for such copolymer include 1-butene, 1-pentene, 3-methylpentene-1, 3-methylbutene-1, 1-hexene, 4-methylpentene-1, 5-ethylhexene-1, 1-octene, 1-decene, 1-dodecene, 1-tetradecene, 1-hexadecene, 1-heptadecene, 1-octadecene, 1-eicosene, and the like.

As the polypropylene resin, two or more different types of polypropylene homopolymers or copolymers with ethylene and/or α-olefin having 4 or more carbon atoms, or mixtures thereof can be used.

(Stereoregularity)

The polypropylene resin used for the present invention has the mesopentad fraction (an index of stereoregularity, [mmmm]%) of preferably ranged within 97.0 to 99.9%, more preferably within 97.5 to 99.7%, further preferably within 98.0 to 99.5%, and particularly preferably within 98.5 to 99.3%.

When the mesopentad fraction is 97.0% or more, crystallinity of the polypropylene resin is increased with the improvement of melting temperature of crystal, crystallinity degree, and crystalline orientation degree in the film, allowing the film to have stiffness and heat resistance at high temperature with ease. When the mesopentad fraction is 99.9% or less, cost in polypropylene production may be reduced, and the film is less likely to be broken at the time of film formation. The mesopentad fraction is more preferably 99.5% or less. Mesopentad fraction is measured by nuclear magnetic resonance method (so called NMR method).

For adjusting the mesopentad fraction of the polypropylene resin within the above range, method of washing the obtained polypropylene resin powder with a solvent such as n-heptane, selection of catalyst and/or co-catalyst, or selection of components of the polypropylene resin composition as needed can be preferably employed.

(Melting temperature)

The polypropylene resin forming the biaxially-oriented polypropylene film of the present invention has the lower limit of a melting temperature (Tm) measured by DSC of preferably 160°C, more preferably 161°C, further preferably 162°C, and further more preferably 163°C. When Tm is 160°C or higher, the film can have both of stiffness and heat resistance at high temperature.

The upper limit of Tm is preferably 170°C, more preferably 169°C, further preferably 168°C, further more preferably 167°C, and particularly preferably 166°C. When Tm is 170°C or lower, cost up in polypropylene production can be suppressed, and thus produced film becomes hard to be broken at the time of film formation. By blending of crystal nucleating agent to the polypropylene resin, the melting temperature can be further increased.

Tm is a main peak temperature of the endothermic peaks due to melting, which is observed as a result of the following measurement. Sample weighed 1 to 10 mg is placed in an aluminum pan, and the pan is set to a differential scanning calorimetry (DSC). In a nitrogen atmosphere, the sample is melted at 230°C for 5 minutes and the temperature is lowered to 30°C at a scanning rate of -10°C/min. The sample is retained for 5 minutes. Then the temperature is raised at a scanning rate of 10°C/min.

(Crystallization temperature)

The polypropylene resin forming the biaxially-oriented polypropylene film of the present invention has the lower limit of the crystallization temperature (Tc) measured by DSC of 105°C, preferably 108°C, and more preferably 110°C. When Tc is 105°C or higher, crystallization is likely to proceed during stretching in the width direction and the subsequent step of cooling, enabling the film to have stiffness and heat resistance at high temperature with ease.

The upper limit of Tc is preferably 135°C, more preferably 133°C, further preferably 132°C, further more preferably 130°C, particularly preferably 128°C, and the most preferably 127°C. When Tc is 135°C or lower, cost up in polypropylene production can be suppressed, and thus obtained film is less likely to be broken at the time of film formation.

Tc is a main peak temperature of the exothermic peaks observed as a result of the following measurement. Sample weighed 1 to 10 mg is placed in an aluminum pan, and the pan is set to DSC. In a nitrogen atmosphere, the sample is melted at 230°C for 5 minutes, and the temperature is lowered to 30°C at a scanning rate of -10°C/min.

By blending of crystal nucleating agent to the polypropylene resin, the crystallization temperature can be further increased.

(Melt flow rate)

When measured in accordance with JIS K 7210 (1995) under the measurement condition "M" (230°C, 2.16 kgf), the melt flow rate (MFR) of the polypropylene resin forming the biaxially-oriented polypropylene film of the present invention is preferably 4.0 to 30 g/10mins, more preferably 4.5 to 25 g/10mins, further preferably 4.8 to 22 g/10mins, particularly preferably 5.0 to 20 g/10mins, and the most preferably 6.0 to 20 g/10mins.

When the melt flow rate (MFR) of the polypropylene resin is 4.0 g/10mins or more, the biaxially-oriented polypropylene film having low heat-shrinkage ratio can be produced.

When the melt flow rate (MFR) of the polypropylene resin is 30 g/10mins or less, the film formability can be maintained.

In terms of film properties, the lower limit of the melt flow rate (MFR, 230°C, 2.16 kgf) of the polypropylene resin forming the film is preferably 5.0 g/10mins, more preferably 5.5 g/10mins, further preferably 6.0 g/10mins, particularly preferably 6.3 g/10mins, and the most preferably 6.5 g/10mins.

When the melt flow rate (MFR) of the polypropylene resin is 5.0 g/10mins or more, the amount of low-molecular weight components can be increased in the polypropylene resin forming the film. Thus, by employing stretching step in the width direction in a later-described film formation process, the orientation crystallization of the polypropylene resin is more promoted, the crystallinity degree in the film is more likely to be increased, and an entanglement of polypropylene molecular chains in the amorphous parts is more decreased. Therefore, the heat resistance of the film is more likely to be increased.

For setting the melt flow rate (MFR) of the polypropylene resin within the above range, methods such as adjusting average molecular weight or molecular weight distribution of polypropylene resin is preferably employed.

That is, the lower limit of an amount of a polypropylene resin component having a molecular weight of 100,000 or less in the GPC integration curve is preferably 35 mass%, more preferably 38 mass%, further preferably 40 mass%, particularly preferably 41 mass%, and the most preferably 42 mass% in the polypropylene resin forming the film of the present invention.

The upper limit of an amount of the component having a molecular weight of 100,000 or less in the GPC integration curve is preferably 65 mass%, more preferably 60 mass%, and further preferably 58 mass%. When the amount of the component having a molecular weight of 100,000 or less in the GPC integration curve is 65 mass% or less, film strength is less likely to be decreased.

At this time, by comprising components having a long relaxation time such as a high molecular weight component or a long-chain branched component, the amount of the component having a molecular weight of 100,000 or less in the polypropylene resin can be adjusted without major change of overall viscosity. That allows the film formation property to be improved with less effect on the film stiffness and heat-shrinkage.

(Molecular weight distribution)

The polypropylene resin for the present invention has the lower limit of mass average molecular weight (Mw)/ number average molecular weight (Mn), which is an index of molecular weight distribution extent, of preferably 3.5, more preferably 4.0, further preferably 4.5, and particularly preferably 5.0. The upper limit of Mw/Mn is preferably 30, more preferably 25, further preferably 23, particularly preferably 21, and the most preferably 20.

Mw/Mn is obtained by using gel permeation chromatography (GPC). When Mw/Mn is within the above range, the amount of the component having a molecular weight of 100,000 or less can be increased with ease.

Molecular weight distribution of the polypropylene resin can be adjusted by polymerizing the component having different molecular weights in a series of multi-stage plants, by blending the component having different molecular weights off-line in a kneader, by polymerizing with the blend of catalysts of different performances, or by using a catalyst which can contribute to achieve desired molecular weight distribution. The shape of the molecular weight distribution obtained by GPC may be a gently curved molecular weight distribution with a single peak or a molecular weight distribution with multiple peaks and shoulders on a GPC chart with the logarithm of the molecular weight (M) (logM) on the horizontal axis and the differential distribution value (weight fraction per logM) on the vertical axis.

(Method for film formation of biaxially-oriented polypropylene film)

The biaxially-oriented polypropylene film of the present invention is preferably produced by forming an unstretched sheet consisting of the above-described polypropylene resin composition comprising the polypropylene resin as a main component, and biaxially-stretching the unstretched sheet. Examples of the biaxial stretching methods include an inflation simultaneous biaxial stretching method, a tenter simultaneous biaxial stretching method, and a tenter sequential biaxial stretching method. In terms of film formation stability and thickness uniformity, a tenter sequential biaxial stretching method is preferable. Particularly, the unstretched sheet is preferably stretched in the longitudinal direction, and subsequently stretched in the width direction. The unstretched sheet may be stretched in the width direction, and subsequently stretched in the longitudinal direction.

Next, the method for producing the biaxially-oriented polypropylene film of the present invention will be described below. The method is not necessarily limited thereto. The biaxially-oriented polypropylene film of the present invention may be laminated with a layer having other functions on at least one side of the film. The layer may be laminated on one side or both sides of the film. In this case, the above-described polypropylene resin composition is applicable for the other layer or a middle layer. A propylene composition different from that described above is also applicable. The number of laminated layers may be one, two, three, or more layers per one side of the film. In terms of the film production, one or two layers is preferable. As a method of lamination, for example, co-extrusion of film by a feed block method or a multi-manifold method is preferable. Particularly, for improving processability of the biaxially-oriented polypropylene film, a resin layer having heat sealabilty can be laminated as long as the properties of the biaxially-oriented polypropylene film are not failed. For imparting printability, the film may be subjected to corona treatment on one side or both sides of the film.

Hereinafter, an example of a single layer film produced by a tenter sequential biaxial stretching method will be described.

First, resin composition comprising the polypropylene resin is heated and melted using a single-screw or twin-screw extruder, extruded from a T-die in a sheet shape, and cooled and solidified by contacting on a cooling roll. For promoting solidification of the resin, the sheet cooled by the cooling roll is preferably further cooled by immersion in a water tank.

Next, the sheet is stretched in the longitudinal direction by two pairs of heated stretching rolls in which a rotation rate of backward stretching rolls is set to higher, thereby a uniaxially-stretched film is produced.

Subsequently, after the uniaxially-stretched film is preheated, the film is stretched in the width direction at a specific temperature while being grasped by end parts using a tenter type stretching machine to produce a biaxially-stretched film. The stretching step in the width direction will be described in detail below.

After stretching in the width direction, the biaxially-stretched film is subjected to heat treatment at a predetermined temperature to produce biaxially-oriented film. In the heat treatment, the film may be relaxed in the width direction.

Thus, obtained biaxially-oriented polypropylene film may be subjected to corona discharge treatment as needed on at least, for example, one side of the film, and after that, the film is wound using a winder to obtain a film roll.

Hereinafter, each step will be described in detail below.

(Extrusion step)

First, the polypropylene resin composition comprising the polypropylene resin as a main component is heated and melted by a single-screw or a twin-screw extruder at a temperature ranged from 200°C to 300°C, and melted polypropylene resin composition is extruded from a T-die in a sheet shape. The sheet is cooled and solidified by contact on a metal cooling roll. Furthermore, the obtained unstretched sheet is preferably immersed in a water tank.

The temperature of the cooling roll or the water tank is preferably within the range from 10°C to Tc. For increasing film transparency, the sheet is preferably cooled and solidified by the cooling roll set to a temperature ranged from 10 to 50°C. When the cooling temperature is set to 50°C or lower, the transparency of the unstretched sheet tends to be increased. The cooling temperature is preferably 40°C or lower, and further preferably 30°C or lower. For increasing crystalline orientation degree after sequential biaxial stretching, the cooling temperature may be preferably set to 40°C or higher in some cases. However, when propylene homopolymer with the mesopentad fraction of 97.0% or more is used as described above, the cooling temperature is preferably set to 40°C or lower to facilitate stretching in the next step and to reduce thickness unevenness. More preferably, the temperature is 30°C or lower.

The thickness of the unstretched sheet is preferably 3500 $\mu$m or less in terms of cooling efficiency, further preferably 3000 $\mu$m or less. The thickness can be adjusted as needed dependent on the film thickness after sequential biaxial stretching. The thickness of the unstretched sheet can be adjusted by changing the extrusion rate of the polypropylene resin composition or a lip width of a T-die.

(Stretching step in longitudinal direction)

The lower limit of the stretching ratio in the longitudinal direction is preferably 3 times, more preferably 3.5 times, and particularly preferably 3.8 times. When it is within the above range, film strength is likely to be increased, and thickness unevenness is reduced. The upper limit of the stretching ratio in the longitudinal direction is preferably 8 times, more preferably 7.5 times, and particularly preferably 7 times. When it is within the above range, it becomes easier for the film to be stretched in the width direction in the stretching step in the width direction, enabling the productivity to be improved.

The lower limit of the stretching temperature in the longitudinal direction is preferably Tm-40°C, more preferably Tm-37°C, and further preferably Tm-35°C. When the temperature is within the above range, subsequent step of the stretching in the width direction becomes easier, enabling the thickness unevenness to be decreased. The upper limit of the stretching temperature in the longitudinal direction is preferably Tm-7°C, more preferably Tm-10°C, further preferably Tm-12°C. When the temperature is within the above range, heat-shrinkage ratio is likely to be decreased. Further, the film can be prevented from being attached to a stretching roll and causing difficulties in stretching. The film quality may be also prevented from being decreased by increase in surface roughness.

The film may be stretched in the longitudinal direction in multiple stages of 2 or more using 3 or more pairs of stretching rolls.

(Preheating step)

Before the stretching step in the width direction, the uniaxially-oriented film after the stretching in the longitudinal direction needs to be heated at a temperature ranged from Tm to Tm+25(°C) to soften the polypropylene resin composition. By heating at the temperature of Tm or higher, softening proceeds, allowing the film to be stretched more easily in the width direction. When the temperature is Tm+25°C or lower, orientation proceeds at the time of stretching in the width direction, and it becomes easier for the film to develop its stiffness. The temperature is more preferably Tm+2 to Tm+22(°C), and particularly preferably Tm+3 to Tm+20(°C). The highest temperature in the preheating step is defined as a preheating temperature.

(Stretching step in width direction)

The stretching step in the width direction, which comes after the preheating step, may be conducted by the following preferable methods.

In the stretching step in the width direction, the film is stretched preferably at a temperature of Tm-10°C or higher and the preheating temperature or lower. In this case, stretching in the width direction may be started when the temperature reaches the preheating temperature. Stretching in the width direction may be also started when the temperature reaches the temperature lower than the preheating temperature by lowering the temperature after it reaches the preheating temperature.

In the stretching step in the width direction, the lower limit of the stretching temperature is more preferably Tm-9°C, further preferably Tm-7°C, and particularly preferably Tm-5°C. When the stretching temperature in the width direction is within the above range, the obtained biaxially-oriented film is likely to have improved stiffness.

In the stretching step in the width direction, the upper limit of the stretching temperature is preferably Tm+10°C, further preferably Tm+7°C, and particularly preferably Tm+5°C. When the stretching temperature in the width direction is within the above range, stretching unevenness is unlikely to occur.

At the finishing time of the stretching in the width direction, that is, immediately after the stretching ratio reaches to the final stretching ratio in the width direction, cooling of the film starts. The film is preferably cooled at the temperature not higher than the temperature of stretching in the width direction and at Tm-80°C or higher and Tm-15°C or lower, more preferably Tm-80°C or higher and Tm-20°C or lower, further preferably Tm-80°C or higher and Tm-30°C or lower, and particularly preferably Tm-70°C or higher and Tm-40°C or lower.

The temperature can be lowered from the temperature at the finishing time of the stretching in the width direction to the temperature of cooling by gradual decrease, by stepwise decrease or in one step. Stepwise decrease or one-step decrease of the temperature is preferable because of being likely to increase crystalline orientation in the film.

In the stretching step in the width direction, the lower limit of the final stretching ratio in the width direction is preferably 10 times, and more preferably 11 times. When the ratio is 10 times or more, the stiffness of the film is likely to be increased, and thickness unevenness of the film is likely to be decreased. The upper limit of the stretching ratio in the width direction is preferably 20 times, more preferably 17 times, and further preferably 15 times. When the ratio is 20 times or less, the heat-shrinkage is likely to be decreased, and the film is less likely to be broken at the time of stretching.

By using this kind of the polypropylene resin having high crystallinity, high stereoregularity, and high melting temperature, and by employing above-described stretching step in the width direction, molecules of the polypropylene resin become highly aligned in a main orientation direction (corresponding to the width direction in the above-described stretching step in the width direction). As a result, thus obtained biaxially-oriented film has strong crystalline orientation in it, and more crystals having high melting temperature is likely to be formed.

In addition, since the orientation of amorphous part between the crystals also advances in the main orientation direction (corresponding to the width direction in the above-described stretching step in the width direction), the film has high stiffness. There also exist many crystals having high melting temperature around amorphous parts of the film. Thereby, elongated polypropylene molecule in the amorphous part is less likely to be relaxed at the temperature lower than the melting temperature of the crystals, and the molecule is likely to remain in its tensed state. Therefore, the biaxially-oriented film can maintain its high stiffness at high temperature as a whole.

And notably, by employing this kind of stretching step in the width direction, the heat-shrinkage ratio at high temperature as high as 150°C is also more likely to be decreased. This is because the film has more crystals having strong crystalline orientation and high melting temperature around amorphous part, allowing the elongated polypropylene resin molecules in amorphous part not to be easily relaxed at the temperature lower than the melting temperature of the crystals.

Moreover, though orientation of amorphous part between crystals advances in the main orientation direction (corresponding to the width direction in the above-described stretching step in the width direction), it is not extremely in a tensed state, and the tensile elongation at break of the film is increased as a result.

By increasing the amount of the polypropylene resin component having a low molecular weight, the crystallinity degree of the film is more likely to be increased and an entanglement of the polypropylene resin molecular chain in amorphous part is more likely to be decreased. That results in the decrease in the heat-shrinkage stress and the further decrease in the heat-shrinkage ratio. This can be said a breakthrough considering conventional technology where the increase in either the film strength or the heat-shrinkage ratio tends to cause the decrease in the other of the properties.

(Heat treatment step)

The biaxially-oriented film can be subjected to the heat treatment as needed for further decreasing heat-shrinkage ratio. The upper limit of the heat treatment temperature is preferably Tm+10°C, more preferably Tm+7°C, and particularly preferably Tm+5°C. By setting the temperature to Tm+10°C or lower, the film is likely to develop its stiffness, surface roughness of the film is kept from being too high, and the film is less likely to be whitened. The lower limit of the heat treatment temperature is preferably Tm-5°C, more preferably Tm-2°C, and particularly preferably Tm-2°C. When the temperature is lower than Tm-5°C, the heat-shrinkage ratio may become high.

By employing above-described stretching step in the width direction, even though the heat treatment is conducted at a temperature from Tm-5°C to Tm+10, the highly oriented crystals generated during the stretching step are less likely to be melted. That enables the heat-shrinkage ratio of thus obtained film to be more decreased without decreasing stiffness of the film. For adjusting the heat-shrinkage ratio of the film, the film can be relaxed in the width direction at the time of heat treatment. The upper limit of the relaxation rate is preferably 4%. When the relaxation rate is within the above range, film strength is less likely to be decreased, and the thickness fluctuation of the film is likely to be decreased. The upper limit is more preferably 3%, further preferably 2%, further more preferably 1%, and particularly preferably 0%.

(Film thickness)

The thickness of the biaxially-oriented polypropylene film of the present invention may be set according to the needs. For achieving film strength, the lower limit of the film thickness is preferably 2 μm, more preferably 3 μm, further preferably 4 μm, particularly preferably 8 μm, and the most preferably 10 μm. When the film thickness is 2 μm or more, film has stiffness with ease. The upper limit of the film thickness is preferably 100 μm, more preferably 80 μm, further preferably 60 μm, particularly preferably 50 μm, and the most preferably 40 μm. When the film thickness is 100 μm or less, cooling speed of the unstretched sheet is difficult to be decreased in the extruding step.

The biaxially-oriented polypropylene film of the present invention is usually wound as a film roll by forming a roll with a width of about 2000 to 12000 mm and a length of about 1000 to 50000 m. Further, the film roll is slit according to needs and provided as a slit roll with a width of about 300 to 2000 mm and a length of about 500 to 5000 m. The biaxially-oriented polypropylene film of the present invention can be produced as a longer film roll.

(Thickness uniformity)

The biaxially-oriented polypropylene film of the present invention has the lower limit of the thickness uniformity of preferably 0%, more preferably 0.1%, further preferably 0.5%, and particularly preferably 1%. The upper limit of the thickness uniformity is preferably 20%, more preferably 17%, further preferably 15%, particularly preferably 12%, and the most preferably 10%. When the thickness uniformity is within the above range, defects are less likely to occur at the time of post-processing such as coating or printing, and the film can be used for applications requiring precision.

The measurement method of the thickness uniformity is as follows. A test piece of the film with a width of 40 mm in the length direction is cut out from a steady region of the film, where physical properties are stable. Then film thickness is measured using a film feeder manufactured by MIKURON k.k. (the serial number: A90172) and a film thickness continuous measurement device (product name: K-313A, wide-range high-sensitivity electronic micrometer) manufactured by Anritsu Corporation. The film thickness is continuously measured over 20000 mm, and the thickness uniformity is calculated from the following formula.

Thickness uniformity (%) = [(maximum value of thickness-minimum value of thickness)/average value of thickness] x 100

(Film characteristics)

The biaxially-oriented polypropylene film of the present invention is characterized by the following properties. For the biaxially-oriented polypropylene film of the present invention, the "longitudinal direction" is the direction corresponding to a flow direction in the film production process, and the "width direction" is the direction orthogonal to the flow direction in above-described film production process. When the flow direction of the polypropylene film in the production process is not certain, wide-angle X rays are made incident vertically to the film surface, and a scattering peak originated from a (110) plane of α-type crystal is scanned in a circumferential direction. The direction having the highest diffraction intensity in the obtained diffraction intensity distribution is determined as "longitudinal direction", and the direction orthogonal to it is determined as "width direction".

(Half width of diffraction peak originated from oriented crystal)

In an azimuth dependence of a scattering peak of the (110) plane of polypropylene α-type crystal through measurement with wide-angle X rays made vertically incident to the film surface of the biaxially-oriented polypropylene film of the present invention, the upper limit of the half width of a peak (Wh, i.e., full width at half maximum) derived from an oriented crystal in a width direction of the film is preferably 25°, more preferably 24°, more preferably 23°, and particularly preferably 22°. When the half width (Wh) is 25° or lower, the film stiffness can be increased with ease. The lower limit of Wh is preferably 16°, more preferably 17°, and further preferably 18°. For reducing the half width (Wh) of the film, the lower limit of the amount of the component having a molecular weight of 100,000 or less, which is determined by the measurement of an integration curve of the polypropylene resin forming the film by gel permeation chromatography (GPC), is set to 35 mass%, and further, controls of the stretching ratio, the stretching temperature, or the heat fixing temperature of the film are effective.

(Heat-shrinkage ratio at 150°C)

The biaxially-oriented polypropylene film of the present invention has the upper limit of the heat-shrinkage ratio at 150°C in the longitudinal direction of 10%, preferably 7.0%, more preferably 6.0%, further more preferably 5.0%, and particularly preferably 4.0% or less. The upper limit of the heat-shrinkage ratio at 150°C in the width direction is 24%, preferably 21%, more preferably 18%, and particularly preferably 17% or less.

When the heat-shrinkage ratio is 10% or less in the longitudinal direction and 24% or less in the width direction, wrinkles are less likely to occur at the time of heat sealing. In particular, when the heat-shrinkage ratio at 150°C is 8.0% or less in the longitudinal direction and 20% or less in the width direction, distortion of the film generated when fusing a chuck part to an opening part preferably becomes small. For decreasing the heat-shrinkage ratio at 150°C, the lower limit of the amount of the component having a molecular weight of 100,000 or less, which is determined as a result of the measurement of an integration curve of the polypropylene resin forming the film by gel permeation chromatography (GPC), is set to 35 mass%, and further, controls of the stretching ratio, the stretching temperature, or the heat fixing temperature of the film are effective.

(Tensile elongation at break at 23°C)

The biaxially-oriented polypropylene film of the present invention has the lower limit of the tensile elongation at break at 23°C in the longitudinal direction of 195%, preferably 200%, more preferably 210%, and particularly preferably 220% or more. When the tensile elongation at break is 195% or more, breakage of the film or the packaging bag is less likely to occur. The upper limit of the tensile elongation at break at 23°C in the longitudinal direction is preferably 300% as a practical value, and more preferably 280%.

The biaxially-oriented polypropylene film of the present invention has the lower limit of the tensile elongation at break at 23°C in the width direction of preferably 25%, more preferably 30%, more preferably 32%, and particularly preferably 35%. When the tensile elongation at break is 25% or more, breakage of the film or the packaging bag is less likely to occur. The upper limit of the tensile elongation at break in the width direction is preferably 60%, more preferably 55%, and further preferably 50%. When the tensile elongation at break is 60% or less, printing pitch shift at the time of transferring printing ink is less likely to occur, and the packaging bag may have excellent durability. For increasing the tensile elongation at break, the lower limit of the amount of the component having a molecular weight of 100,000 or less, which is determined as a result of the measurement of an integration curve of the polypropylene resin forming the film by gel permeation chromatography (GPC), is set to 35 mass%, and further, controls of the stretching ratio, the stretching temperature, or the heat fixing temperature of the film are effective.

The biaxially-oriented polypropylene film of the present invention becomes more excellent when the film has the following properties and structures.

(Tensile strength at break at 23°C)

The biaxially-oriented polypropylene film of the present invention has the lower limit of the tensile strength at break at 23°C in the longitudinal direction of preferably 90 MPa, more preferably 100 MPa, further preferably 110 MPa, and particularly preferably 120 MPa. When the tensile strength at break is 90 MPa or more, printing pitch shift at the time of transferring printing ink is less likely to occur, and the packaging bag may have excellent durability. The upper limit of the tensile strength at break at 23°C in the longitudinal direction is preferably 200 MPa as a practical value, more preferably 180 MPa, and further preferably 160 MPa. When the tensile strength at break is 200 MPa or less, breakage of the film or the packaging bag is less likely to occur.

The biaxially-oriented polypropylene film of the present invention has the lower limit of the tensile strength at break at 23°C in the width direction of preferably 380 MPa, more preferably 400 MPa, further preferably 430 MPa, and particularly preferably 450 MPa. When the tensile strength at break is 380 MPa or more, printing pitch shift at the time of transferring printing ink is less likely to occur, and the packaging bag may have excellent durability. The upper limit of the tensile strength at break at 23°C in the width direction is preferably 550 MPa as a practical value, more preferably 520 MPa, and further preferably 500 MPa. When the tensile strength at break is 550 MPa or less, breakage of the film or the packaging bag is less likely to occur.

The tensile strength at break can be set within the range by controlling the stretching ratio, the stretching temperature, and the heat fixing temperature of the film.

(Stress at 5% elongation at 23°C)

The biaxially-oriented polypropylene film of the present invention has the lower limit of the stress at 5% elongation at 23°C (F5) in the longitudinal direction of preferably 40 MPa, more preferably 42 MPa, further preferably 44 MPa, further more preferably 46 MPa, and particularly preferably 48 MPa. When the stress at 5% elongation at 23°C is 40 MPa or more, the film has high stiffness, allowing the bag shape of the packaging bag made of the film to be maintained easily and the film not to be easily deformed at the time of processing such as printing. The upper limit of F5 in the longitudinal direction is preferably 70 MPa, more preferably 65 MPa, further preferably 62 MPa, and particularly preferably 60 MPa. When the F5 is 70 MPa or less, practical production is easy and the width-length balance is likely to be improved.

The biaxially-oriented polypropylene film of the present invention has the lower limit of F5 at 23°C in the width direction of preferably 160 MPa, more preferably 170 MPa, further preferably 180 MPa, and further more preferably 190 MPa. When the F5 is 160 MPa or more, the film has high stiffness, allowing the bag shape of the packaging bag made of the film to be maintained easily and the film not to be easily deformed at the time of processing such as printing. The upper limit of F5 in the width direction is preferably 250 MPa, more preferably 230 MPa, and further preferably 220 MPa. When the F5 is 250 MPa or less, practical production is easy and the width-length balance is likely to be improved.

F5 can be set within the range by adjusting the stretching ratio, the relaxing ratio, and the temperature at the time of film formation.

(Heat-shrinkage ratio at 120°C)

The biaxially-oriented polypropylene film of the present invention has the upper limit of the heat-shrinkage ratio at 120°C in the longitudinal direction of preferably 2.0%, more preferably 1.5%, further preferably 1.2%, and particularly preferably 1.0%. When the heat-shrinkage ratio is 2.0% or less, printing pitch shift at the time of transferring printing ink is less likely to occur. The upper limit of the heat-shrinkage ratio at 120°C in the width direction is 5.0%, preferably 4.0%, more preferably 3.5%, and particularly preferably 2.5%. When the heat-shrinkage ratio is 5.0% or less, wrinkles at the time of heat sealing is less likely to occur.

When the heat-shrinkage ratio at 120°C in the longitudinal direction is smaller than the heat-shrinkage ratio at 120°C in the width direction, printing pitch shift at the time of transferring printing ink is further less likely to occur. The heat-shrinkage ratio at 120°C and the balance of the heat-shrinkage ratio in the longitudinal direction - the width direction can be set within the range by controlling the stretching ratio, the stretching temperature, and the heat fixing temperature of the film.

When the heat-shrinkage ratio at 120°C in the longitudinal direction is smaller than the heat-shrinkage ratio at 120°C in the width direction, printing pitch shift at the time of transferring printing ink is further less likely to occur. The heat-shrinkage ratio at 120°C and the balance of the heat-shrinkage ratio in the longitudinal direction - the width direction can be set within the range by controlling the stretching ratio, the stretching temperature, and the heat fixing temperature of the film.

(Refractive index)

The biaxially-oriented polypropylene film of the present invention has the lower limit of a refractive index in the longitudinal direction (Nx) of preferably 1.4950, more preferably 1.4970, and further preferably 1.4980. When Nx is 1.4950 or more, the film stiffness is likely to be increased. The upper limit of the refractive index in the longitudinal direction (Nx) is preferably 1.5100, more preferably 1.5070, and further preferably 1.5050. When Nx is 1.5100 or less, the film is likely to be excellent in balance of properties in the longitudinal direction - the width direction of the film.

The biaxially-oriented polypropylene film of the present invention has the lower limit of a refractive index in the width direction (Ny) of preferably 1.5230, preferably 1.5235, and more preferably 1.5240. When Ny is 1.5230 or more, the film stiffness is likely to be increased. The upper limit of the refractive index in the width direction (Ny) is preferably 1.5280, more preferably 1.5275, and further preferably 1.5270. When Ny is 1.5280 or less, the film is likely to be excellent in balance of properties in the longitudinal direction - the width direction of the film.

The biaxially-oriented polypropylene film of the present invention has the lower limit of a refractive index in the thickness direction (Nz) of preferably 1.4960, more preferably 14965, and further preferably 1.4970. When Nz is 1.4960 or more, the film stiffness is likely to be increased. The upper limit of the refractive index in the thickness direction (Nz) is preferably 1.5020, more preferably 1.5015, and further preferably 1.5010. When Nz is 1.5020 or less, the heat resistance of the film is likely to be increased.

The refractive index can be set within the range by controlling the stretching ratio, the stretching temperature, and the heat fixing temperature of the film.

(ΔNy)

The biaxially-oriented polypropylene film of the present invention has the lower limit of ΔNy of 0.0220, preferably 0.0225, more preferably 0.0228, and further preferably 0.0230. When ΔNy is 0.0220 or more, film stiffness is likely to be increased. The upper limit of ΔNy is preferably 0.0270 as a practical value, more preferably 0.0265, further preferably 0.0262, and particularly preferably 0.0260. When ΔNy is 0.0270 or less, the thickness unevenness is likely to be improved. ΔNy can be set within the range by controlling the stretching ratio, the stretching temperature, and the heat fixing temperature of the film.

ΔNy is calculated according to the following formula with the refractive indexes of Nx, Ny and Nz, each of which represents refractive indexes along the longitudinal direction, the width direction, and the thickness direction of the film. ΔNy represents an extent of orientation in the width direction of the film to the entire orientation of the film of the longitudinal direction, the width direction, and the thickness direction.

$$\Delta Ny = Ny\text{-}[(Nx+Nz)/2]$$

(Plane orientation coefficient)

The biaxially-oriented polypropylene film of the present invention has the lower limit of the plane orientation coefficient (ΔP) of preferably 0.0135, more preferably 0.0138, and further preferably 0.0140. When ΔP is 0.0135 or more, the film has good balance in the plane directions and has improved thickness unevenness. The upper limit of the plane orientation coefficient (ΔP) is preferably 0.0155 as a practical value, more preferably 0.0152, and further preferably 0.0150. When ΔP is 0.0155 or less, the film is likely to have excellent heat resistance to high temperature. The plane orientation coefficient (ΔP) can be set within the range by controlling the stretching ratio, the stretching temperature, and the heat fixing temperature of the film. The plane orientation coefficient (ΔP) is calculated according to the formula [(Nx+Ny)/2]-Nz.

(X-ray orientation degree)

The biaxially-oriented polypropylene film of the present invention has the lower limit of the X-ray orientation degree calculated from Wh according to the following formula of preferably 0.860, more preferably 0.867, and further preferably 0.872. By adjusting the X-ray orientation degree to 0.860 or more, the film stiffness is likely to be increased.

$$\text{X-ray orientation degree} = (180\text{-}Wh)/180$$

The upper limit of the X-ray orientation degree is preferably 0.911, more preferably 0.906, and further preferably 0.900. By adjusting the X-ray orientation degree to 0.911 or less, the film formation can be stabilized.

(Haze)

The biaxially-oriented polypropylene film of the present invention has the upper limit of the haze of preferably 5.0%, more preferably 4.5%, further preferably 4.0%, particularly preferably 3.5%, and the most preferably 3.0%. When the haze is 5.0% or less, the film is easily applied to applications requiring transparency. The lower limit of the haze is preferably 0.1% as a practical value, more preferably 0.2%, further preferably 0.3%, and particularly preferably 0.4%. When the haze is 0.1% or more, the production is facilitated. The haze can be set within the range by controlling the cooling roll (CR) temperature, stretching temperature in the width direction, preheating temperature before the stretching in the width direction at a tenter, stretching temperature in the width direction, or heat fixing temperature, or by adjusting the amount of polypropylene resin component having a molecular weight of 100,000 or less. The haze may be increased by the addition of antiblocking agent or by laminating a sealing layer.

(Practical characteristics of film)

Practical characteristics of the biaxially-oriented polypropylene film of the present invention will be described below.

(Wrinkles during heat sealing)

For forming a packaging bag for foods, the contents are filled in a pre-made bag, and the pre-made bag is heated to melt and fuse the film for sealing. The same is often done when making a packaging bag while filling a pre-made bag with food. Usually, a sealant film made of polyethylene or polypropylene is laminated on a base film, and the surfaces of this sealant film are fused. The film is sealed by the heating method of applying pressure from the base film side using a heating plate to press the film down. The sealing width is taken as around 10 mm in many cases. In the heat sealing step, the base film is heated too, and the shrinkage at this time causes wrinkles. The bags with less wrinkles are better in terms of durability, and also in terms of increasing motivations to buy. Sealing temperature may be around 120°C, however, higher sealing temperature is required to increase the speed of the bag making process. Even in this case, shrinkage is preferred to be small. When a chuck is fused to an opening part of the bag, further higher temperature is required for sealing.

(Printing pitch shift)

As a basic structure of a packaging film in many cases, the packaging film consists of a laminated film comprising a sealant film and a base film with printed side. A bag making machine is used for the bag making, and various types of bag-making machines are used for making bags such as a three-sided bag, a standing bag, a gusset bag, and the like. Printing pitch shift is thought to be resulted from the expansion and shrinkage of the base film caused by tension and heat applied to the film in the process of printing. Decreasing the number of defective products caused by printing pitch shift is important in terms of the effective use of resources and increasing motivations to buy.

(Film processing)

The biaxially-oriented polypropylene film of the present invention is printed according to the needs by the following printing methods such as letterpress printing, lithography printing, intaglio printing, stencil printing, and transfer printing.

In addition, the biaxially-oriented polypropylene film of the present invention can be used as a laminate having a heat sealabilty by attaching with a sealant film of an unstretched sheet, an uniaxially-oriented film, or a biaxially-oriented film made of a low-density polyethylene, a linear low-density polyethylene, an ethylene-vinyl acetate copolymer, polypropylene, or polyester. Moreover, for increasing the gas barrier property and heat resistance, an unstretched sheet, an uniaxially-oriented film, or a biaxially-oriented film made of an aluminum foil, polyvinylidene chloride, nylon, ethylene-vinylalcohol copolymer, or polyvinyl alcohol can be laminated as an intermediate layer between a biaxially-oriented polypropylene film and a sealant film. For the lamination of a sealant film, an adhesive applied by the method of dry lamination or hot melt lamination can be used.

For enhancing gas barrier property, an aluminum or inorganic oxides can be vapor-deposited onto a biaxially-oriented polypropylene film, an intermediate layer film, or a sealant film. The vapor deposition method includes vacuum deposition, sputtering, or ion plating method, in particular, vacuum deposition of silica, alumina, or the mixture thereof is preferable.

The biaxially-oriented polypropylene film of the present invention can comprise an anticlouding agent such as fatty acid esters of polyhydric alcohols, amines of higher fatty acids, amides of higher fatty acids, ethylene oxide adduct of amines or amides of higher fatty acids in an amount ranged from 0.2 to 5 mass% in the film. That enables the biaxially-oriented polypropylene film to be suitable for packaging perishable items consisting of plant species required to be highly fresh, such as vegetables, fruits, and flowers.

Additives for quality improvement such as slipperiness or antistatic properties of the film can be blended as long as the additives does not impair the effect of the present invention. For example, for improving the productivity, lubricant such as wax or metallic soap, a plasticizing agent, a processing aid, a heat stabilizer, an antioxidant, an antistatic agent, or an ultraviolet absorbing agent can be blended.

(Industrial applicability)

The biaxially-oriented polypropylene film of the present invention has above-described excellent properties, which is not found in conventional films. Therefore, the film is preferably used for a packaging bag, and the thickness of the film can be decreased compared to the film conventionally used.

Moreover, the biaxially-oriented polypropylene film of the present invention is suitable for the application at high temperature such as insulating film of a capacitor or a motor, a back sheet for a solar battery, a barrier film for an inorganic oxide, a base film for transparent conductive film such as ITO, or for the application requiring stiffness such as a separate film. In addition, the biaxially-oriented polypropylene film enables coating or printing process at high temperature with the use of a coating material, an ink, or a laminating adhesive, which were conventionally difficult to use. The production efficiency is expected to be improved.

EXAMPLES

Hereinafter, the present invention will be described with Examples in more detail. Properties of the film was measured and evaluated by the following methods.

(1) Melt flow rate

Melt flow rate (MFR) was measured at 230°C with a load of 2.16 kgf in accordance with JIS K 7210.

(2) Mesopentad fraction

Mesopentad fraction ([mmmm]%) of the polypropylene resin was measured using $^{13}$C-NMR and calculated following the method described in Zambelli et al., Macromolecules, Vol. 6, p925 (1973). For the $^{13}$C-NMR measurement, "AVANCE500" manufactured by BRUKER was used. Measurement was conducted at 110°C using the measurement sample prepared by dissolving 200 mg of sample in a mixed solution of o-dichlorobenzene and hexadeuterobenzene in a ratio of 8:2 at 135°C.

(3) Number average molecular weight, weight average molecular weight, amount of component having a molecular weight of 100,000 or less, and molecular weight distribution of polypropylene resin

The molecular weight was determined in terms of PP using a gel permeation chromatography (GPC) on the basis of a monodispersed polystyrene. When the base line was not clear, an elution peak of being closest to an elution peak of a standard substance and at high molecular side was chosen, and a base line was determined in the range broaden to the lowest position of a skirt of high molecular side of the chosen elution peak.

Measurement conditions for GPC were as follows.

Equipment: HLC-8321PC/HT (manufactured by Tosoh Corporation)
Detector: RI
Solvent: 1,2,4-trichlorobenzene+dibutylhydroxytoluene (0.05%)
Column: TSK gel guard column HHR(30)HT (7.5 mmI.D. x 7.5 cm) x 1 + TSK gel GMHHR-H(20)HT (7.8 mmI.D. x 30 cm) x 3
Flow rate: 1.0 mL/min
Injection volume: 0.3 mL
Measurement temperature: 140°C

Number average molecular weight (Mn) and mass average molecular weight (Mw) were respectively defined according to the following formulae of molecular weight ($M_i$) and a number of molecule ($N_i$) of each elution points in the GPC curve obtained through molecular weight calibration curve.

Number average molecular weight:

$$Mn = \Sigma(N_i \cdot M_i)/ \Sigma N_i$$

Mass average molecular weight:

$$Mw = \Sigma(N_i \cdot M_i^2)/\Sigma(N_i \cdot M_i)$$

Molecular weight distribution is calculated from Mw/Mn.

The proportion of the component having a molecular weight of 100,000 or less was calculated from an integration curve of a molecular weight distribution obtained by GPC.

(4) Crystallization temperature (Tc) and melting temperature (Tm)

Heat measurement was conducted in a nitrogen atmosphere using a differential scanning calorimeter Q1000 manufactured by TA Instruments. The polypropylene resin (about 5 mg) was cut out from a pellet and enclosed in an aluminum pan for measurement. After being heated to 230°C and kept for 5 minutes, the sample was cooled to 30°C at a rate of -10°C/min. The exothermic peak temperature was determined as crystallization temperature (Tc). The crystallization energy ($\Delta$Hc) was obtained by setting a base line so that the exothermic peak area is smoothly formed from the start position to the end position of the peak. The sample was then kept for 5 minutes at 30°C and raised to 230°C at 10°C/min, and the temperature of the main endothermic peak was defined as a melting temperature (Tm).

(5) Film thickness

Film thickness was measured using Millitron 1202D manufactured by Seiko EM.

(6) Haze

Haze was measured at 23°C in accordance with JIS K 7105 using NDH5000 manufactured by NIPPON DENSHOKU INDUSTRIES CO., LTD.

(7) X ray half width and orientation degree

Measurement was conducted by a transmission method using an X-ray diffractometer (RINT2500, manufactured by Rigaku Corporation). X rays having 1.5418Å of wavelength were used, and a scintillation counter was used as a detector. A sample was prepared by stacking films so that the thickness of the sample became 500 $\mu$m. A sample table was placed at the diffraction peak position (diffraction angle $2\theta$=14.1°) of the (110) plane of $\alpha$-type crystal of the polypropylene resin, and the sample was rotated 360° along an axis of the thickness direction of the film to obtain the azimuth dependence of the diffraction intensity of the (110) plane. From this azimuth dependence, the half width Wh of a diffraction peak derived from the oriented crystals in the width direction of the film was obtained.

Also, X-ray orientation degree was calculated according to the following formula using Wh.

$$\text{X rays orientation degree} = (180\text{-}Wh)/180$$

(8) Refractive index, $\Delta$Ny, and plane orientation coefficient

Refractive index of the film was measured at 23°C at the wavelength of 589.3 nm using an Abbe refractometer manufactured by ATAGO CO., LTD. Refractive indexes of the film along the longitudinal direction and the width direction were respectively determined as Nx and Ny, and the refractive index along the thickness direction was determined as Nz. $\Delta$Ny was calculated using Nx, Ny, and Nz according to (formula) Ny-[(Nx+Nz)/2], and the plane orientation coefficient ($\Delta$P) was calculated according to (formula) [(Nx+Ny)/2] -Nz.

(9) Tensile test

The tensile strength of the film was measured in the longitudinal direction and the width direction at 23°C in accordance with JIS K 7127. The sample was cut out from the film in the size of 15 mm x 200 mm and was set in a tensile tester (dual column desktop tester Instron 5965, manufactured by Instron Japan Company Limited) with a chuck width of 100 mm. Tensile test was conducted at a tensile speed of 200 mm/min. From thus obtained strain-stress curve, Young's modulus was calculated from the slope of the straight line at the beginning of the elongation, and stress at 5% elongation (F5) was calculated. Tensile strength at break and tensile elongation at break were determined as the strength and the elongation at the time of the film sample's breakage, respectively.

(10) Heat-shrinkage ratio

Heat-shrinkage ratio was measured by the following method in accordance with JIS Z 1712. The film was cut in the longitudinal direction and in the width direction of the film to have the size of 20 mm in width and 200 mm in length. Then the test piece was hung in a hot air oven set to 120°C or 150°C, and heated for 5 minutes. The film length after heating was measured, and the heat-shrinkage ratio was calculated as the ratio of the heat shrunk length to the original film length.

(Example 1)

As a polypropylene resin, 80 parts by weight of propylene homopolymer PP-1 (MFR=7.5 g/10mins, [mmmm] =98.9%, Tc=116.2°C, Tm =162.5°C, SUMITOMO NOBLEN FLX80E4 manufactured by SUMITOMO CHEMICAL COMPANY) and 20 parts by weight of propylene homopolymer PP-2 (MFR=11 g/10mins, [mmmm]=98.8%, Tc=116.5°C, Tm=161.5°C, EL80F5 manufactured by SUMITOMO CHEMICAL COMPANY) were blended and used.

The blended polypropylene resin was extruded in a sheet shape from a T-die at 250°C and contacted on a cooling roll set to the temperature of 20°C, and the sheet was immersed in a water tank set to 20°C. After that, the sheet was stretched 4.5 times at 142°C in the longitudinal direction by two pairs of rolls. Next, the film was grasped by clips at both ends and introduced into a hot air oven. After being preheated at 170°C, the film was stretched 12 times at 167°C in the width direction as a first stretching. Right after stretching in the width direction, the film was cooled at 100°C while being grasped by the clips, and then the film was subjected to the heat treatment at 165°C without relaxation in the width direction. Thickness of thus produced film was 20.3 $\mu$m.

The structure of the polypropylene resin is shown in Table 1 and the conditions of the film formation are shown in Table 2. As shown in Table 3, the film having high stiffness and low heat-shrinkage ratio at high temperature was produced.

(Example 2)

The film was produced in the same manner as Example 1 except that the stretching in the width direction was conducted at 162°C and the heat treatment was conducted at 170°C. Thickness of thus produced film was 20.8 $\mu$m. The structure of the polypropylene resin is shown in Table 1 and the conditions of the film formation are shown in Table 2. As shown in Table 3, the film having high stiffness and low heat-shrinkage ratio at high temperature was produced.

(Example 3)

The film was produced in the same manner as Example 1 except that the stretching in the width direction was conducted at 162°C. Thickness of thus produced film was 20.7 $\mu$m.

The structure of the polypropylene resin is shown in Table 1 and the conditions of the film formation are shown in Table 2. As shown in Table 3, the film having high stiffness and low heat-shrinkage ratio at high temperature was produced.

(Example 4)

The film was produced in the same manner as Example 1 except that the stretching in the width direction was conducted at 162°C and cooling was conducted at 140°C. Thickness of thus produced film was 20.6 $\mu$m.

The structure of the polypropylene resin is shown in Table 1 and the conditions of the film formation are shown in Table 2. As shown in Table 3, the film having high stiffness and low heat-shrinkage ratio at high temperature was produced.

(Comparative Example 1)

As a polypropylene resin, propylene homopolymer PP-1 (MFR=7.5 g/10mins, [mmmm]=98.9%, Tc=116.2°C, Tm=162.5°C, SUMITOMO NOBLEN FLX80E4 manufactured by SUMITOMO CHEMICAL COMPANY) was used. The polypropylene resin was extruded in a sheet shape from a T-die at 250°C and contacted on a cooling roll set to the temperature of 20°C, and the sheet was immersed in a water tank set to 20°C. After that, the sheet was stretched 4.5 times at 145°C in the longitudinal direction by two pairs of rolls. Next, the film was grasped by clips at both ends and introduced into a hot air oven. After being preheated at 170°C, the sheet was stretched 6 times at 160°C in the width direction as a first stretching. Then the film was stretched 1.36 times at 145°C as a second stretching, and the film was totally stretched 8.2 times. Right after stretching in the width direction, the film was cooled at 100°C while being grasped by the clips, and the film was heat fixed at 163°C. Thickness of thus produced film was 18.7 $\mu$m.

The structure of the polypropylene resin is shown in Table 1 and the conditions of the film formation are shown in Table 2. In the stretching step in the width direction, the first stretching is defined as the former section and the second stretching is defined as the latter section. As shown in Table 3, the film was inferior in the tensile elongation at break and the heat-shrinkage ratio at 150°C.

(Comparative Example 2)

As a polypropylene resin, 80 parts by weight of PP-1 and 20 parts by weight of propylene homopolymer PP-2 (MFR=11 g/10mins, [mmmm]=98.8%, Tc=116.5°C, Tm=161.5°C, EL80F5 manufactured by SUMITOMO CHEMICAL COMPANY) were blended and used. The film was produced in the same manner as Comparative Example 1 except that the stretching temperature in the longitudinal direction was 142°C, the temperature of the first stretching in the width direction was 162°C, and the heat fixing temperature was 165°C. Thickness of thus produced film was 21.3 μm.
The structure of the polypropylene resin is shown in Table 1 and the conditions of the film formation are shown in Table 2. As shown in Table 3, the film was inferior in the tensile strength at break and the tensile elongation at break.

(Comparative Example 3)

The film was produced in the same manner as Comparative Example 2 except that the 3% relaxing was conducted during heat fixing. Thickness of thus produced film was 21.1 μm.
The structure of the polypropylene resin is shown in Table 1 and the conditions of the film formation are shown in Table 2. As shown in Table 3, the film was inferior in the tensile strength at break and the tensile elongation at break.

(Comparative Example 4)

The film was produced in the same manner as Comparative Example 2 except that the stretching temperature in the longitudinal direction was 145°C and the cooling temperature right after stretching in the width direction was 140°C. Thickness of thus produced film was 18.9 μm.
The structure of the polypropylene resin is shown in Table 1 and the conditions of the film formation are shown in Table 2. As shown in Table 3, the film was inferior in the tensile strength at break and the tensile elongation at break.

(Comparative Example 5)

The film was produced in the same manner as Comparative Example 2 except that the film was heat fixed at 165°C while being grasped by clips and without cooling after the stretching in the width direction. Thickness of thus produced film was 19.5 μm.
The structure of the polypropylene resin is shown in Table 1 and the conditions of the film formation are shown in Table 2. As shown in Table 3, the film was inferior in the heat-shrinkage ratio at 150°C.

(Comparative Example 6)

The film was produced in the same manner as Comparative Example 2 except that the stretching temperature of the second stretching in the width direction was 155°C. Thickness of thus produced film was 20.3 μm.
The structure of the polypropylene resin is shown in Table 1 and the conditions of the film formation are shown in Table 2. As shown in Table 3, the film was inferior in the tensile strength at break and the tensile elongation at break.

(Comparative Example 7)

The film was produced in the same manner as Comparative Example 2 except that the longitudinal stretching ratio was 4.8 times. Thickness of thus produced film was 19.1 μm.
The structure of the polypropylene resin is shown in Table 1 and the conditions of the film formation are shown in Table 2. As shown in Table 3, the film was inferior in the tensile strength at break and the tensile elongation at break.

(Comparative Example 8)

The film was produced in the same manner as Comparative Example 2 except that the stretching ratio in the width direction was 6.6 times at the first stretching and 1.5 times at the second stretching, and the total stretching ratio was 9.9 times. Thickness of thus produced film was 20.1 μm.
The structure of the polypropylene resin is shown in Table 1 and the conditions of the film formation are shown in Table 2. As shown in Table 3, the film was inferior in the tensile strength at break and the tensile elongation at break.

(Comparative Example 9)

PP-1 was used as a polypropylene resin. The polypropylene resin was extruded in a sheet shape from a T-die at 250°C and contacted on a cooling roll set to the temperature of 20°C, and the sheet was immersed in a water tank set to 20°C. After that, the sheet was stretched 4.5 times at 143°C in the longitudinal direction. In the stretching step in the width direction at a tenter, the preheating temperature was set to 170°C, and the film was stretched 8.2 times at 158°C. Subsequently, the film was heat fixed at 168°C. Thickness of thus produced film was 18.6 μm.

The structure of the polypropylene resin is shown in Table 1, the conditions of the film formation are shown in Table 2, and the physical properties are shown in Table 3. As shown in Table 3, the film was inferior in the tensile strength at break and the tensile elongation at break.

(Comparative Example 10)

The film was produced in the same manner as Comparative Example 9 except that the blend of 80 parts by weight of PP-1 and 20 parts by weight of PP-2 was used as a polypropylene resin. Thickness of thus produced film was 20.0 μm.

The structure of the polypropylene resin is shown in Table 1, the conditions of the film formation are shown in Table 2, and the physical properties are shown in Table 3. As shown in Table 3, the film was inferior in the tensile strength at break.

(Comparative Example 11)

As a polypropylene resin, PP-3 (MFR=3 g/10mins, [mmmm]=94.8%, Tc=117.2°C, Tm=160.6°C, FL203D manufactured by Japan Polypropylene Corporation) was used. The polypropylene resin was extruded in a sheet shape from a T-die at 250°C and contacted on a cooling roll set to the temperature of 20°C, and the sheet was immersed in a water tank set to 20°C. After that, the sheet was stretched 4.5 times at 135°C in the longitudinal direction. In the stretching step in the width direction at a tenter, the preheating temperature was set to 166°C, and the film was stretched 6 times at 155°C as the first stretching. Then the film was stretched 1.36 times at 139°C as the second stretching, and the film was totally stretched 8.2 times. Right after stretching in the width direction, the film was cooled at 95°C while being grasped by the clips, and then the film was heat treated at 158°C without relaxation in the width direction. Thickness of thus produced film was 19.2 μm.

The structure of the polypropylene resin is shown in Table 1, the conditions of the film formation are shown in Table 2, and the physical properties are shown in Table 3. As shown in Table 3, the film was inferior in the heat-shrinkage ratio at 150°C.

(Comparative Example 12)

As a polypropylene raw material, PP-4 (MFR=2.7 g/10mins, [mmmm]=98.7%, Tc=114.7°C, Tm=163.0°C, FS2012 manufactured by SUMITOMO CHEMICAL COMPANY) was used. The polypropylene resin was extruded in a sheet shape from a T-die at 250°C and contacted on a cooling roll set to the temperature of 20°C, and the sheet was immersed in a water tank set to 20°C. After that, the sheet was stretched 4.5 times at 145°C in the longitudinal direction. In the stretching step in the width direction at a tenter, the preheating temperature was set to 170°C, and the film was stretched 6 times at 160°C as the first stretching. Then the film was stretched 1.36 times at 145°C as the second stretching, and the film was totally stretched 8.2 times. Right after stretching in the width direction, the film was cooled at 100°C while being grasped by the clips, and then the film was heat treated at 163°C without relaxation in the width direction. Thickness of thus produced film was 21.2 μm.

The structure of the polypropylene resin is shown in Table 1, the conditions of the film formation are shown in Table 2, and the physical properties are shown in Table 3. As shown in Table 3, the film was inferior in the tensile elongation at break and the heat-shrinkage ratio at 150°C.

(Comparative Example 13)

As a polypropylene resin, PP-4 was used. The polypropylene resin was extruded in a sheet shape from a T-die at 250°C and contacted on a cooling roll set to the temperature of 20°C, and the sheet was immersed in a water tank set to 20°C. After that, the sheet was stretched 5.8 times at 130°C in the longitudinal direction. The film was heated at the preheating temperature of 167°C and stretched 8.6 times at the stretching temperature of 161°C in the width direction at a tenter. Then the film was heat fixed at 130°C with the relaxation of 10%. Subsequently, the film was subjected to a second heat fixing at 140°C. Thickness of thus produced film was 13.4 μm. The structure of the polypropylene resin is shown in Table 1, the conditions of the film formation are shown in Table 2, and the physical properties are shown in Table 3. As shown in Table 3, the film was inferior in the tensile elongation at break and the heat-shrinkage ratio at 150°C.

(Comparative Example 14)

The film was produced in the same manner as Example 1 except that the film was stretched 8 times at 162°C in the width direction and was cooled at 140°C. Thickness of thus produced film was 19.7 μm.

The structure of the polypropylene resin is shown in Table 1 and the conditions of the film formation are shown in Table 2. As shown in Table 3, the film was inferior in the tensile strength at break and the tensile elongation at break.

(Comparative Example 15)

The film was produced in the same manner as Example 1 except that the film was stretched 8 times at 162°C in the width direction. Thickness of thus produced film was 20.1 μm. The structure of the polypropylene resin is shown in Table 1 and the conditions of the film formation are shown in Table 2. As shown in Table 3, the film was inferior in the tensile strength at break and the tensile elongation at break.

[Table 1]

| | PP-1 | PP-2 | PP-3 | PP-4 |
|---|---|---|---|---|
| Copolymerization amount of component other than propylene (mol%) | 0 | 0 | 0 | 0 |
| MFR (g/10mins) | 7.5 | 11 | 3 | 2.7 |
| [mmmm](%) | 98.9 | 98.8 | 94.8 | 98.7 |
| Tc (°C) | 116.2 | 116.5 | 117.2 | 114.7 |
| Tm (°C) | 162.5 | 161.5 | 160.6 | 163.0 |
| ΔHc (J/g) | 104.8 | 107.8 | 94.9 | 102.4 |
| Amount of component having molecular weight of 10,000 or less (mass%) | 4.0 | 6.9 | 3.0 | 3.5 |
| Amount of component having molecular weight of 100,000 or less (mass%) | 40.5 | 53.1 | 37.1 | 30.0 |

[Table 2A]

| | | Example 1 | Example 2 | Example 3 | Example 4 | Comparative Example 1 | Comparative Example 2 | Comparative Example 3 | Comparative Example 4 | Comparative Example 5 | Comparative Example 6 |
|---|---|---|---|---|---|---|---|---|---|---|---|
| Raw material polypropylene resin | PP-1 | 80 | 80 | 80 | 80 | 100 | 80 | 80 | 80 | 80 | 80 |
| | PP-2 | 20 | 20 | 20 | 20 | - | 20 | 20 | 20 | 20 | 20 |
| | PP-3 | - | - | - | - | - | - | - | - | - | - |
| | PP-4 | - | - | - | - | - | - | - | - | - | - |
| Mixed polypropylene resin | Melt flow rate (g/10mins) | 8.5 | 8.5 | 8.5 | 8.5 | 7.5 | 8.5 | 8.5 | 8.5 | 8.5 | 8.5 |
| | Amount of component having molecular weight of 100,000 or less (mass%) | 43.0 | 43.0 | 43.0 | 43.0 | 40.5 | 43.0 | 43.0 | 43.0 | 43.0 | 43.0 |
| Extrusion step | Extrusion temperature (°C) | 250 | 250 | 250 | 250 | 250 | 250 | 250 | 250 | 250 | 250 |
| | Cooling temperature (°C) | 20 | 20 | 20 | 20 | 20 | 20 | 20 | 20 | 20 | 20 |
| Stretching step in longitudinal direction | Stretching temperature in longitudinal direction (°C) | 142 | 142 | 142 | 142 | 145 | 142 | 142 | 145 | 142 | 142 |
| | Stretching ratio in longitudinal direction (times) | 4.5 | 4.5 | 4.5 | 4.5 | 4.5 | 4.5 | 4.5 | 4.5 | 4.5 | 4.5 |
| Preheating step | Preheating temperature (°C) | 170 | 170 | 170 | 170 | 170 | 170 | 170 | 170 | 170 | 170 |

| | | Example 1 | Example 2 | Example 3 | Example 4 | Comparative Example 1 | Comparative Example 2 | Comparative Example 3 | Comparative Example 4 | Comparative Example 5 | Comparative Example 6 |
|---|---|---|---|---|---|---|---|---|---|---|---|
| Stretching step in width direction | Width-direction stretching temperature in former section (°C) | 167 | 162 | 162 | 162 | 160 | 162 | 162 | 162 | 162 | 162 |
| | Width-direction stretching-ratio in former section (times) | - | - | - | - | 6 | 6 | 6 | 6 | 6 | 6 |
| | Width-direction stretching temperature in latter section (°C) | 167 | 162 | 162 | 162 | 145 | 145 | 145 | 145 | 145 | 155 |
| | Width-direction stretching-ratio in latter section (times) | - | - | - | - | 1.36 | 1.36 | 1.36 | 1.36 | 1.36 | 1.36 |
| | Final width-direction stretching-ratio | 12.0 | 12.0 | 12.0 | 12.0 | 8.2 | 8.2 | 8.2 | 8.2 | 8.2 | 8.2 |
| | Temperature immediately after stretching in width direction (°C) | 100 | 100 | 100 | 140 | 100 | 100 | 100 | 140 | - | 100 |

(continued)

| | | Example 1 | Example 2 | Example 3 | Example 4 | Comparative Example 1 | Comparative Example 2 | Comparative Example 3 | Comparative Example 4 | Comparative Example 5 | Comparative Example 6 |
|---|---|---|---|---|---|---|---|---|---|---|---|
| Heat treatment step | Heat treatment temperature (°C) | 165 | 170 | 165 | 165 | 163 | 165 | 165 | 165 | 165 | 165 |
| | Relaxation rate during heat treatment (%) | 0 | 0 | 0 | 0 | 0 | 0 | 3 | 0 | 0 | 0 |
| | Temperature of second heat treatment (°C) | - | - | - | - | - | - | - | - | - | - |

EP 4 129 626 B1

[Table 2B]

| | | Comparative Example 7 | Comparative Example 8 | Comparative Example 9 | Comparative Example 10 | Comparative Example 11 | Comparative Example 12 | Comparative Example 13 | Comparative Example 14 | Comparative Example 15 |
|---|---|---|---|---|---|---|---|---|---|---|
| Raw material polypropylene resin | PP-1 | 80 | 80 | 100 | 80 | - | - | - | 80 | 80 |
| | PP-2 | 20 | 20 | - | 20 | - | - | - | 20 | 20 |
| | PP-3 | - | - | - | - | 100 | - | - | - | - |
| | PP-4 | - | - | - | - | - | 100 | 100 | - | - |
| Mixed polypropylene resin | Melt flow rate (g/10mins) | 8.5 | 8.5 | 7.5 | 8.5 | 3 | 2.7 | 2.7 | 8.5 | 8.5 |
| | Amount of component having molecular weight of 100,000 or less (mass%) | 43.0 | 43.0 | 40.5 | 43.0 | 37.1 | 30.0 | 30.0 | 43.0 | 43.0 |
| Extrusion step | Extrusion temperature (°C) | 250 | 250 | 250 | 250 | 250 | 250 | 250 | 250 | 250 |
| | Cooling temperature (°C) | 20 | 20 | 20 | 20 | 20 | 20 | 20 | 20 | 20 |
| Stretching step in longitudinal direction | Stretching temperature in longitudinal direction (°C) | 142 | 142 | 143 | 143 | 135 | 145 | 130 | 142 | 142 |
| | Stretching ratio in longitudinal direction (times) | 4.8 | 4.5 | 4.5 | 4.5 | 4.5 | 4.5 | 5.8 | 4.5 | 4.5 |
| Preheating step | Preheating temperature (°C) | 170 | 170 | 170 | 170 | 166 | 170 | 167 | 170 | 170 |

22

| | | Comparative Example 7 | Comparative Example 8 | Comparative Example 9 | Comparative Example 10 | Comparative Example 11 | Comparative Example 12 | Comparative Example 13 | Comparative Example 14 | Comparative Example 15 |
|---|---|---|---|---|---|---|---|---|---|---|
| Stretching step in width direction | Width-direction stretching temperature in former section (°C) | 162 | 162 | 158 | 158 | 155 | 160 | 161 | 162 | 162 |
| | Width-direction stretching-ratio in former section (times) | 6 | 6.6 | 6 | 6 | 6 | 6 | 6.2 | - | - |
| | Width-direction stretching temperature in latter section (°C) | 145 | 145 | 158 | 158 | 139 | 145 | 161 | 162 | 162 |
| | Width-direction stretching-ratio in latter section (times) | 1.36 | 1.5 | 1.36 | 1.36 | 1.36 | 1.36 | 1.39 | - | - |
| | Final width-direction stretching-ratio | 8.2 | 9.9 | 8.2 | 8.2 | 8.2 | 8.2 | 8.6 | 8 | 8 |
| | Temperature immediately after stretching in width direction (°C) | 100 | 100 | - | - | 95 | 100 | - | 140 | 100 |

EP 4 129 626 B1

(continued)

| | | Comparative Example 7 | Comparative Example 8 | Comparative Example 9 | Comparative Example 10 | Comparative Example 11 | Comparative Example 12 | Comparative Example 13 | Comparative Example 14 | Comparative Example 15 |
|---|---|---|---|---|---|---|---|---|---|---|
| Heat treatment step | Heat treatment temperature (°C) | 165 | 165 | 168 | 168 | 158 | 163 | 130 | 165 | 165 |
| | Relaxation rate during heat treatment (%) | 0 | 0 | 0 | 0 | 0 | 0 | 10 | 0 | 0 |
| | Temperature of second heat treatment (°C) | - | - | - | - | - | - | 140 | - | - |

[Table 3A]

| | Example 1 | Example 2 | Example 3 | Example 4 | Comparative Example 1 | Comparative Example 2 | Comparative Example 3 | Comparative Example 4 | Comparative Example 5 | Comparative Example 6 |
|---|---|---|---|---|---|---|---|---|---|---|
| Thickness (μm) | 20.3 | 20.8 | 20.7 | 20.6 | 18.7 | 21.3 | 21.1 | 18.9 | 19.5 | 20.3 |
| Haze (%) | 1.1 | 0.9 | 1.2 | 1.0 | 0.7 | 2.2 | 2.0 | 2.0 | 2.1 | 2.1 |
| 23°C F5 (width direction) (MPa) | 182 | 189 | 207 | 205 | 193 | 180 | 169 | 171 | 183 | 175 |
| 23°C F5 (longitudinal direction) (MPa) | 48 | 49 | 49 | 49 | 49 | 44 | 46 | 46 | 46 | 45 |
| Tensile strength at break (width direction) (MPa) | 422 | 466 | 473 | 458 | 450 | 397 | 366 | 396 | 435 | 373 |
| Tensile strength at break (longitudinal direction) (MPa) | 124 | 124 | 128 | 123 | 134 | 106 | 105 | 111 | 114 | 106 |
| Tensile elongation at break (width direction) (%) | 29 | 40 | 34 | 31 | 27 | 26 | 22 | 32 | 29 | 24 |
| Tensile elongation at break (longitudinal direction) (%) | 261 | 239 | 238 | 232 | 178 | 176 | 172 | 179 | 199 | 182 |
| Heat-shrinkage ratio at 120°C (width direction) (%) | 2.0 | 1.7 | 3.0 | 3.3 | 4.0 | 3.0 | 2.2 | 3.0 | 3.0 | 3.3 |

| | Example 1 | Example 2 | Example 3 | Example 4 | Comparative Example 1 | Comparative Example 2 | Comparative Example 3 | Comparative Example 4 | Comparative Example 5 | Comparative Example 6 |
|---|---|---|---|---|---|---|---|---|---|---|
| Heat-shrinkage ratio at 120°C (longitudinal direction) (%) | 0.2 | 0.3 | 0.8 | 0.5 | 1.0 | 1.0 | 1.0 | 0.8 | 1.0 | 1.0 |
| Heat-shrinkage ratio at 150°C (width direction) (%) | 15.5 | 19.8 | 22.0 | 20.2 | 27.3 | 22 | 18.2 | 17.8 | 24.7 | 18.3 |
| Heat-shrinkage ratio at 150°C (longitudinal direction) (%) | 3.3 | 4.5 | 4.8 | 3.7 | 7 | 5 | 4.2 | 5.2 | 5.3 | 5.8 |
| Refractive index in width direction Ny | 1.5254 | 1.5249 | 1.5249 | 1.5251 | 1.5245 | 1.5254 | 1.5258 | 1.5250 | 1.5261 | 1.5260 |
| Refractive index in longitudinal direction Nx | 1.5010 | 1.5011 | 1.5003 | 1.5001 | 1.5020 | 1.5028 | 1.5034 | 1.5030 | 1.5020 | 1.5031 |
| Refractive index in thickness direction Nz | 1.4991 | 1.4990 | 1.4980 | 1.4980 | 1.4985 | 1.5001 | 1.5001 | 1.5000 | 1.4997 | 1.5007 |
| ΔNy | 0.0254 | 0.0248 | 0.0257 | 0.0261 | 0.0243 | 0.0240 | 0.0240 | 0.0235 | 0.0253 | 0.0241 |
| Plane orientation coefficient ΔP | 0.0141 | 0.0139 | 0.0146 | 0.0146 | 0.0148 | 0.0140 | 0.0145 | 0.0140 | 0.0144 | 0.0139 |
| X ray half width (°) | 20.9 | 20.1 | 20.7 | 20.0 | 20.6 | 22.2 | 23.0 | 23.8 | 20.2 | 23.6 |
| X-ray orientation degree | 0.884 | 0.888 | 0.885 | 0.889 | 0.886 | 0.877 | 0.872 | 0.868 | 0.888 | 0.869 |

EP 4 129 626 B1

26

| | Comparative Example 7 | Comparative Example 8 | Comparative Example 9 | Comparative Example 10 | Comparative Example 11 | Comparative Example 12 | Comparative Example 13 | Comparative Example 14 | Comparative Example 15 |
|---|---|---|---|---|---|---|---|---|---|
| Thickness (μm) | 19.1 | 20.1 | 18.6 | 20 | 19.2 | 21.2 | 13.4 | 19.7 | 20.3 |
| Haze (%) | 2.2 | 2.0 | 1.0 | 1.1 | 0.4 | 0.4 | 0.6 | 1.5 | 1.4 |
| 23°C F5 (width direction) (MPa) | 184 | 188 | 133 | 131 | 158 | 183 | 210 | 157 | 168 |
| 23°C F5 (longitudinal direction) (MPa) | 45 | 46 | 44 | 44 | 39 | 46 | 55 | 47 | 48 |
| Tensile strength at break (width direction) (MPa) | 379 | 391 | 336 | 344 | 414 | 430 | 476 | 357 | 379 |
| Tensile strength at break (longitudinal direction) (MPa) | 117 | 113 | 118 | 124 | 163 | 160 | 182 | 117 | 112 |
| Tensile elongation at break (width direction) (%) | 21 | 22 | 37 | 44 | 29 | 27 | 33 | 40 | 38 |
| Tensile elongation at break (longitudinal direction) (%) | 173 | 190 | 188 | 219 | 201 | 192 | 160 | 191 | 180 |
| Heat-shrinkage ratio at 120°C (width direction) (%) | 3.0 | 2.7 | 0.7 | 1.0 | 9.8 | 6.5 | 2.7 | 2.5 | 2.3 |
| Heat-shrinkage ratio at 120°C (longitudinal direction) (%) | 1.0 | 0.8 | 1.3 | 1.3 | 4.0 | 1.7 | 1.5 | 0.5 | 0.3 |

EP 4 129 626 B1

(continued)

| | Comparative Example 7 | Comparative Example 8 | Comparative Example 9 | Comparative Example 10 | Comparative Example 11 | Comparative Example 12 | Comparative Example 13 | Comparative Example 14 | Comparative Example 15 |
|---|---|---|---|---|---|---|---|---|---|
| Heat-shrinkage ratio at 150°C (width direction) (%) | 17.7 | 17.3 | 11.7 | 13.2 | 57 | 43 | 37.8 | 16.7 | 18.7 |
| Heat-shrinkage ratio at 150°C (longitudinal direction) (%) | 3.5 | 4.3 | 4.7 | 4.3 | 34 | 17 | 13.7 | 3.5 | 4.3 |
| Refractive index in width direction $N_y$ | 1.5249 | 1.5259 | 1.5252 | 1.5245 | 1.5187 | 1.5215 | 1.5251 | 1.5246 | 1.5241 |
| Refractive index in longitudinal direction $N_x$ | 1.5031 | 1.5020 | 1.5050 | 1.5056 | 1.4991 | 1.5010 | 1.4997 | 1.5025 | 1.5027 |
| Refractive index in thickness direction $N_z$ | 1.4998 | 1.4999 | 1.5012 | 1.5010 | 1.4952 | 1.4973 | 1.4980 | 1.5001 | 1.4991 |
| $\Delta N_y$ | 0.0234 | 0.0250 | 0.0221 | 0.0212 | 0.0216 | 0.0224 | 0.0262 | 0.0233 | 0.0232 |
| Plane orientation coefficient $\Delta P$ | 0.0142 | 0.0141 | 0.0139 | 0.0141 | 0.0137 | 0.0140 | 0.0144 | 0.0134 | 0.0143 |
| X ray half width (°) | 23.6 | 21.8 | 28.6 | 28.9 | 23.9 | 24.4 | 21.2 | 25.8 | 25.3 |
| X-ray orientation degree | 0.869 | 0.879 | 0.841 | 0.839 | 0.867 | 0.864 | 0.882 | 0.857 | 0.859 |

**Claims**

1.  A biaxially-oriented polypropylene film satisfying the following requirements (1) and (2):

    (1) a half width of a peak derived from an oriented crystal in a width direction of the film in an azimuth dependence of a (110) plane of polypropylene $\alpha$-type crystal through measurement with wide-angle X rays diffraction is 25° or less;
    (2) the film has a heat-shrinkage ratio at 150°C of 10% or less in a longitudinal direction and 24% or less in a width direction;

    and **characterized in that** the film further satisfies the following requirement (3):
    (3) the film has a tensile elongation at break at 23°C of 195% or more in the longitudinal direction.

2.  The biaxially-oriented polypropylene film according to claim 1, wherein

    the film has a heat-shrinkage ratio at 120°C of 2.0% or less in the longitudinal direction and 5.0% or less in the width direction, and
    the heat-shrinkage ratio at 120°C in the longitudinal direction is smaller than the heat-shrinkage ratio at 120°C in the width direction.

3.  The biaxially-oriented polypropylene film according to claim 1 or 2, wherein the film has a refractive index in the width direction Ny of 1.5230 or more and $\Delta$Ny of 0.0220 or more.

4.  The biaxially-oriented polypropylene film according to any one of claims 1 to 3, wherein the film has a haze of 5.0% or less.

5.  The biaxially-oriented polypropylene film according to any one of claims 1 to 4, wherein the film comprises a polypropylene resin with a mesopentad fraction of 97.0% or more.

6.  The biaxially-oriented polypropylene film according to any one of claims 1 to 5, wherein the film comprises a polypropylene resin with a crystallization temperature of 105°C or higher and a melting temperature of 160°C or higher.

7.  The biaxially-oriented polypropylene film according to any one of claims 1 to 6, wherein the film comprises a polypropylene resin with a melt flow rate of 4.0 g/10mins or more.

8.  The biaxially-oriented polypropylene film according to any one of claims 1 to 7, wherein an amount of a polypropylene resin component having a molecular weight of 100,000 or less is 35 mass% or more in the polypropylene resin forming the film.

9.  The biaxially-oriented polypropylene film according to any one of claims 1 to 8, wherein the film has an orientation degree of 0.85 or more.


**Patentansprüche**

1.  Eine biaxial orientierte Polypropylenfolie, die die folgenden Anforderungen (1) und (2) erfüllt:

    (1) eine Halbwertsbreite eines Peaks, abgeleitet von einem orientierten Kristall in einer Querrichtung der Folie in einer Azimutabhängigkeit einer (110) Ebene eines Polypropylen-Kristalls vom $\alpha$-Typ durch Messung mit Weitwinkel-Röntgenbeugung, beträgt 25° oder weniger;
    (2) der Film weist ein Wärme-Schrumpfverhältnis bei 150 °C von 10 % oder weniger in Längsrichtung und 24 % oder weniger in Querrichtung auf;

    und ist **dadurch gekennzeichnet, dass** die Folie ferner die folgende Anforderung (3) erfüllt:
    (3) die Folie weist bei 23 °C eine Zugdehnung bei Bruch von 195 % oder mehr in Längsrichtung auf.

2.  Die biaxial orientierte Polypropylenfolie gemäß Anspruch 1, wobei

die Folie bei 120 °C ein Wärme-Schrumpfverhältnis von 2,0 % oder weniger in Längsrichtung und 5,0 % oder weniger in Querrichtung aufweist und

das Wärme-Schrumpfverhältnis bei 120 °C in Längsrichtung kleiner ist als das Wärme-Schrumpfverhältnis bei 120 °C in Querrichtung.

3. Die biaxial orientierte Polypropylenfolie gemäß Anspruch 1 oder 2, wobei die Folie einen Brechungsindex in der Querrichtung Ny von 1,5230 oder mehr und ΔNy von 0,0220 oder mehr aufweist.

4. Die biaxial orientierte Polypropylenfolie gemäß einem der Ansprüche 1 bis 3, wobei die Folie eine Trübung von 5,0 % oder weniger aufweist.

5. Die biaxial orientierte Polypropylenfolie gemäß einem der Ansprüche 1 bis 4, wobei die Folie ein Polypropylenharz mit einem Mesopentaden-Anteil von 97,0 % oder mehr umfasst.

6. Die biaxial orientierte Polypropylenfolie gemäß einem der Ansprüche 1 bis 5, wobei die Folie ein Polypropylenharz mit einer Kristallisationstemperatur von 105 °C oder höher und einer Schmelztemperatur von 160 °C oder höher umfasst.

7. Die biaxial orientierte Polypropylenfolie gemäß einem der Ansprüche 1 bis 6, wobei die Folie ein Polypropylenharz mit einer Schmelzflussrate von 4,0 g/10 min oder mehr umfasst.

8. Die biaxial orientierte Polypropylenfolie gemäß einem der Ansprüche 1 bis 7, wobei eine Menge einer Polypropylenharz-Komponente mit einem Molekulargewicht von 100.000 oder weniger 35 Massen-% oder mehr in dem Polypropylenharz beträgt, das die Folie bildet.

9. Die biaxial orientierte Polypropylenfolie gemäß einem der Ansprüche 1 bis 8, wobei die Folie einen Orientierungsgrad von 0,85 oder mehr aufweist.

**Revendications**

1. Film de polypropylène orienté biaxialement répondant aux exigences suivantes (1) et (2) :

   (1) une demie largeur d'un pic dérivé à partir d'un cristal orienté dans une direction de largeur du film dans une dépendance d'azimut d'un plan (110) du cristal de polypropylène de type α par la mesure par diffraction grand angle aux rayons X est de 25° ou moins ;
   (2) le film a un rapport de thermorétrécissement à 150°C de 10 % ou moins dans une direction longitudinale et 24 % ou moins dans une direction de largeur ;

   et **caractérisé en ce que** le film répond en outre à l'exigence suivante (3) :
   (3) le film a un allongement en traction à rupture à 23°C de 195 % ou plus dans la direction longitudinale.

2. Film de polypropylène orienté biaxialement selon la revendication 1, où

   le film a un rapport de thermorétrécissement à 120°C de 2,0 % ou moins dans la direction longitudinale et de 5,0 % ou moins dans la direction de la largeur, et
   le rapport de thermorétrécissement à 120°C dans la direction longitudinale est inférieur au rapport à 120°C dans la direction de la largeur.

3. Film de polypropylène orienté biaxialement selon la revendication 1 ou 2, où le film a un indice de réfraction dans la direction de la largeur Ny de 1,5230 ou plus et un ΔNy de 0,0220 ou plus.

4. Film de polypropylène orienté biaxialement selon l'une quelconque des revendications 1 à 3, où le film a un trouble de 5,0 % ou moins.

5. Film de polypropylène orienté biaxialement selon l'une quelconque des revendications 1 à 4, où le film comprend une résine de polypropylène avec une fraction mésopentade de 97,0 % ou plus.

6. Film de polypropylène orienté biaxialement selon l'une quelconque des revendications 1 à 5, où le film comprend une résine de polypropylène ayant une température de cristallisation de 105°C ou plus et une température de fusion de 160°C ou plus.

7. Film de polypropylène orienté biaxialement selon l'une quelconque des revendications 1 à 6, où le film comprend une résine de polypropylène ayant un indice de fluidité à chaud de 4,0 g/10 min ou plus.

8. Film de polypropylène orienté biaxialement selon l'une quelconque des revendications 1 à 7, où une quantité d'un composant de résine de polypropylène ayant un poids moléculaire de 100 000 ou moins est de 35 % en masse ou plus dans la résine de polypropylène formant le film.

9. Film de polypropylène orienté biaxialement selon l'une quelconque des revendications 1 à 8, où le film a un degré d'orientation de 0,85 ou plus.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016182003 A
- JP 2013177645 A
- JP 2017226161 A

**Non-patent literature cited in the description**

- **ZAMBELLI et al.** *Macromolecules*, 1973, vol. 6, 925